# EUROPEAN PATENT APPLICATION

(11) **EP 2 128 608 A1**
(43) Date of publication of application: **02.12.2009**
(21) Application number: 08711650.5
(22) Date of filing: 20.02.2008
(51) Int. Cl.: G01N 29/04, G07D 7/08

(54) **MEDIUM FATIGUE DETECTING DEVICE AND MEDIUM FATIGUE DETECTING METHOD**

(30) Priority: 28.02.2007 JP 2007049549
(71) Applicant: Murata Manufacturing Co. Ltd., Kyoto 617-8555 (JP)
(72) Inventor: KONDO, Chikashi, Nagaokakyo-shi Kyoto 617-8555 (JP)
(74) Representative: Reeve, Nicholas Edward
(86) International application number: PCT/JP2008/052844
(87) International publication number: WO 2008/105291

(57) **Abstract**

A medium fatigue detection apparatus and a medium fatigue detection method are provided which have versatility and which can simply detect fatigue of a sheet-like medium with no necessity of previously inputting master data as a reference and executing comparative processing operations with respect to detected data.

The medium fatigue detection apparatus includes an ultrasonic sending device (11) for oscillating ultrasonic waves as burst waves, an ultrasonic receiving device (12), and a sensed intensity detector (22). The devices (11) and (12) are arranged at opposed positions with a sheet-like medium (5), e.g., a banknote, passing therebetween. The ultrasonic waves sent from the device (11) are incident on a principal surface of the sheet-like medium (5) at a predetermined incident angle θ. Fatigue of the medium (5) is detected by measuring a variation in sensed intensity of the ultrasonic waves having passed through the sheet-like medium (5).

## Description

### Technical Field

The present invention relates to an apparatus and a method for detecting wrinkles, twists, tears, etc. of banknotes (bills), sheets of copy paper, plastic sheets, and so on.

### Background Art

At the present time, ATMs (Automatic Telling Machines) are widely employed over the world. Handled banknotes (having wrinkles, twists, tears, etc.)in the ATM are often fatigured. In such a case, when the banknotes are taken into the ATM and are assorted depending on different sorts of the banknotes by a sorting and handling mechanism which is installed within the ATM, there is a risk that the fatigued banknotes may jam inside the machine. To overcome the problem with jamming of the fatigued banknotes, it has been tried to prevent highly fatigued banknotes from going back to the market, for example, by providing a function of detecting fatigue of banknotes in a banknote counter which are installed in banks and the ATM.

Examples of known systems and apparatuses for detecting fatigue of the banknote, etc. are described in Patent Documents 1 and 2. In the detection system described in Patent Document 1, an ultrasonic sending sensor and an ultrasonic receiving sensor are arranged on the principal surface side of a medium to measure ultrasonic waves reflected by the medium. A surface condition (wrinkles) of the medium is detected in comparison with previously-input information of the distance between the medium and the sensor. However, the known detection system has problems in that the information of the distance between the medium and the sensor needs to be input in advance and processing operations is complicated. Further, if the position of the medium is deviated, for example, it becomes difficult to accurately measure the distance between the medium and the sensor.

In the detection apparatus described in Patent Document 2, a banknote is guided to pass between an ultrasonic sending unit and an ultrasonic receiving unit. The banknote is caused to resonate upon irradiation of ultrasonic waves, and secondary radiation waves are received to determine a natural frequency of the banknote from the resonance frequency. The determined natural frequency is compared with the natural frequency of a normal banknote, thus recognizing deterioration in rigidity of the banknote.

However, the known detection apparatus also has the following problems. The natural frequency of the normal banknote needs to be input in advance. In order to inspect plural sorts of banknotes by a single apparatus, therefore, plural types of data have to be input to execute comparative processing operations for each type. Thus, versatility is not sufficient.
Patent Document 1: Japanese Unexamined Patent Application Publication No. 5-97284
Patent Document 2: Japanese Unexamined Patent Application Publication No. 2006-250869

### Disclosure of Invention

### Problems to be Solved by the Invention

Accordingly, an object of the present invention is to provide a medium fatigue detection apparatus and a medium fatigue detection method, which have versatility and which can simply detect fatigue of a sheet-like medium with no necessity of previously inputting master data as a reference and executing comparative processing operations with respect to detected data.

### Means for Solving the Problems

To achieve the above object, the present invention provides a medium fatigue detection apparatus for detecting fatigue of a sheet-like medium by using ultrasonic waves, the medium fatigue detection apparatus comprising:
ultrasonic sending means for oscillating the ultrasonic waves as burst waves;
ultrasonic receiving means; and
sensed intensity detecting means for detecting intensity of the ultrasonic waves sensed by the ultrasonic receiving means,
wherein the ultrasonic sending means and the ultrasonic receiving means are arranged at such positions that both the means are opposed to each other with the sheet-like medium passing therebetween and that the ultrasonic waves sent from the ultrasonic sending means are incident on a principal surface of the sheet-like medium at a predetermined angle.

The present invention also provides a medium fatigue detection method for detecting fatigue of a sheet-like medium by conveying the sheet-like medium to pass between ultrasonic sending means and ultrasonic receiving means, sending ultrasonic waves from the ultrasonic sending means to pass through the sheet-like medium, and receiving the ultrasonic waves by the ultrasonic receiving means, the medium fatigue detection method comprising the steps of:
oscillating the ultrasonic waves sent from the ultrasonic sending means, as burst waves, to be incident on a principal surface of the conveyed sheet-like medium at a predetermined angle;
receiving the ultrasonic waves having passed through the sheet-like medium by the ultrasonic receiving means which is disposed in an opposed relation to the ultrasonic sending means; and
detecting fatigue of the sheet-like medium by measuring a variation in sensed intensity of the received ultrasonic waves.

In the present invention, the sheet-like medium is excited by the ultrasonic waves sent from the sending means, and the ultrasonic waves having changed with vibration of the sheet-like medium are received by the receiving means. An excitation state of the sheet-like medium differs between a not-fatigued portion and a fatigued portion (including wrinkles, twists, tears, etc.). In the fatigued portion, a variation in the output voltage, which represents the sensed intensity of the ultrasonic waves, is larger than that in the not-fatigued portion. A level of the fatigue of the sheet-like medium is detected based on the magnitude of the variation in the output voltage. The reason why the magnitude of the variation in the output voltage differs depending on the fatigue condition of the medium, e.g., a banknote, resides in that a transmissive or reflective state of the ultrasonic waves varies due to ruggedness on the surface of the medium. With such a variation in the transmissive or reflective state, the transmitted or reflected ultrasonic waves cause interference, thus giving rise to changes in the sensed intensity.

In the present invention, preferably, the ultrasonic waves sent from the ultrasonic sending means are incident on the principal surface of the sheet-like medium at an angle of 5° or more with respect to a normal direction to the principal surface. If the incident angle is smaller than 5°, this means that the ultrasonic waves are incident on the sheet-like medium substantially at a right angle. In some cases, therefore, the incident ultrasonic waves are multi-reflected and the variation in the output voltage representing the sensed intensity is increased to such an extent as making the fatigue of the sheet-like medium undetectable. There is no particular upper limit of the incident angle. However, because each of the sending means and the receiving means has a predetermined thickness in itself, the sending means and the receiving means may contact the sheet-like medium being conveyed if the incident angle is set too large.

Further, preferably, a center axis of the ultrasonic sending means and a center axis of the ultrasonic receiving means are arranged to lie on a linear line in an opposed relation. Such an arrangement is effective in preventing a reduction of the sensed intensity and detecting the fatigue of the sheet-like medium with more efficient utilization of the ultrasonic waves.

### Advantages

According to the present invention, the fatigue of the sheet-like medium can be detected by receiving the ultrasonic waves which have passed through the sheet-like medium, and by measuring the variation in the output voltage, which represents the sensed intensity of the ultrasonic waves. In other words, master data as a reference is not needed and versatility is obtained. Further, the process of detecting fatigue of the sheet-like medium can be very simply performed.

### Brief Description of Drawings

[Fig. 1] Fig. 1 is an explanatory view illustrating one embodiment of a medium fatigue detection apparatus according to the present invention.
[Fig. 2] Fig. 2 is a graph showing an output voltage that represents sensed intensity of ultrasonic waves having passed through a sheet-like medium.
[Fig. 3] Fig. 3 is a graph showing changes in the sensed intensity based on the output voltage shown in Fig. 2.
[Fig. 4] Fig. 4 is a graph showing, in more detail, output voltages that represent sensed intensities of the ultrasonic waves for a new banknote and a fatigued banknote. Best Mode for Carrying Out the Invention

Embodiments of a medium fatigue detection apparatus and a medium fatigue detection method according to the present invention will be described with reference to the accompanying drawings.

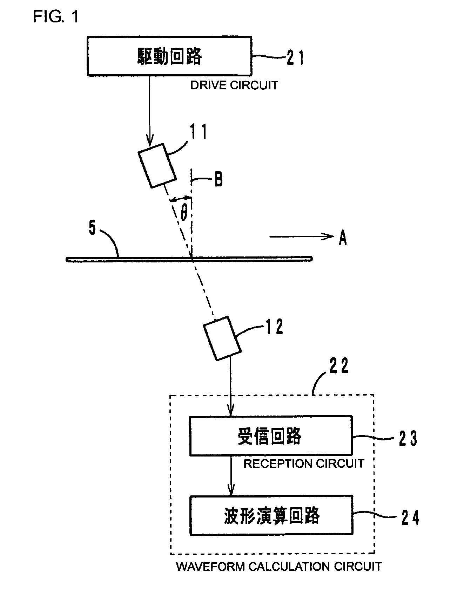

Fig. 1 illustrates one embodiment of the medium fatigue detection apparatus according to the present invention. The apparatus is made up of an ultrasonic sending device 11 equipped with a drive circuit 21, and an ultrasonic receiving device 12 equipped with a sensed intensity detector 22. The ultrasonic sending device 11 oscillates ultrasonic waves in the form of burst waves. The sensed intensity detector 22 is made up of a reception circuit 23 which includes an amplification circuit for amplifying received waves and a peak hold circuit, and a waveform calculation circuit 24.

A sheet-like medium 5, i.e., a detection target, is conveyed at a predetermined speed in the direction of arrow A between the ultrasonic sending device 11 and the ultrasonic receiving device 12. The sheet-like medium 5 can be provided as a paper medium, e.g., a banknote or a sheet of copy paper, a plastic sheet, or the like. The apparatus detects fatigue, such as represented by wrinkles, twists, tears, etc., of the sheet-like medium 5.

The ultrasonic sending device 11 is arranged such that the sent ultrasonic waves are incident on a principal surface of the sheet-like medium 5 at a predetermined incident angle θ with respect to a normal line B to the principal surface. Further, a center axis of the ultrasonic sending device 11 and a center axis of the ultrasonic receiving device 12 are arranged to lie on a linear line in an opposed relation with respect to the sheet-like medium 5 that is conveyed therebetween. Such an arrangement increases utilization efficiency of the ultrasonic waves. The center axis of the ultrasonic sending device 11 and the center axis of the ultrasonic receiving device 12 may be slightly deviated to such an extent that the utilization efficiency of the ultrasonic waves is not significantly reduced from the practical point of view.

The sheet-like medium 5 is excited upon irradiation of the ultrasonic waves from the ultrasonic sending device 11, and the ultrasonic waves having changed with vibration of the sheet-like medium 5 are received by the ultrasonic receiving device 12. After the received waves have been amplified by the amplification circuit of the reception circuit 23, the peak hold circuit holds a maximum value of an output voltage generated upon receiving the ultrasonic waves which are driven (oscillated) so as to burst at certain intervals. In such a state, a variation in the output voltage is measured by the waveform calculation circuit 24. An excitation state of the sheet-like medium 5 differs depending on the condition of the sheet-like medium 5 (i.e., between a fatigued portion including wrinkles, twists, tears, etc. and a not-fatigued portion). More specifically, in the fatigued portion, the variation in the output voltage, which represents the sensed intensity of the ultrasonic waves, is larger than that in the not-fatigued portion (as described in detail later). A level of the fatigue of the sheet-like medium 5 can be detected based on the magnitude of the variation in the output voltage.

The reason why the magnitude of the variation in the output voltage differs depending on the fatigue condition of the sheet-like medium 5, e.g., a banknote, resides in that a transmissive or reflective state of the ultrasonic waves varies due to ruggedness on the surface of the medium 5. With such a variation in the transmissive or reflective state, the transmitted or reflected ultrasonic waves cause interference, thus giving rise to changes in the sensed intensity.

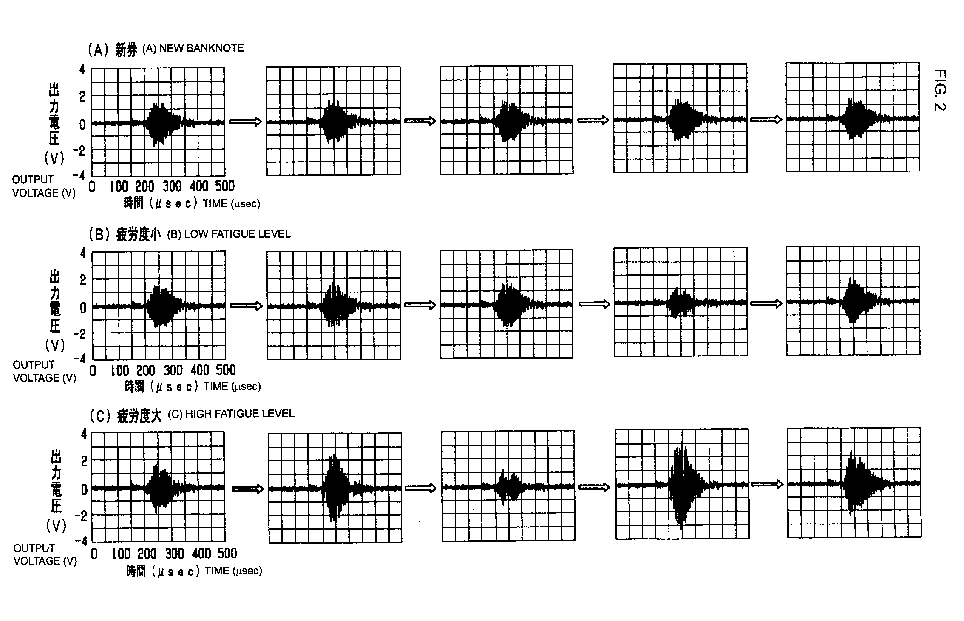

Fig. 2 shows a waveform representing the sensed intensity of the ultrasonic waves, which have been received by the ultrasonic receiving device 12 and amplified by the reception circuit 23. In measuring the waveform, a banknote is used as the sheet-like medium 5, and the sheet-like medium 5 is conveyed at a predetermined speed. The sheet-like medium 5 is stopped whenever it is conveyed through 5 mm. In a stopped state, 10 pulses of 300-kHz ultrasonic waves are sent as burst waves from the ultrasonic sending device 11 and are received by the ultrasonic receiving device 12 after passing through the sheet-like medium 5.
The spacing between the ultrasonic sending device 11 and the ultrasonic receiving device 12 is 20 mm, and the incident angle θ is 15°.

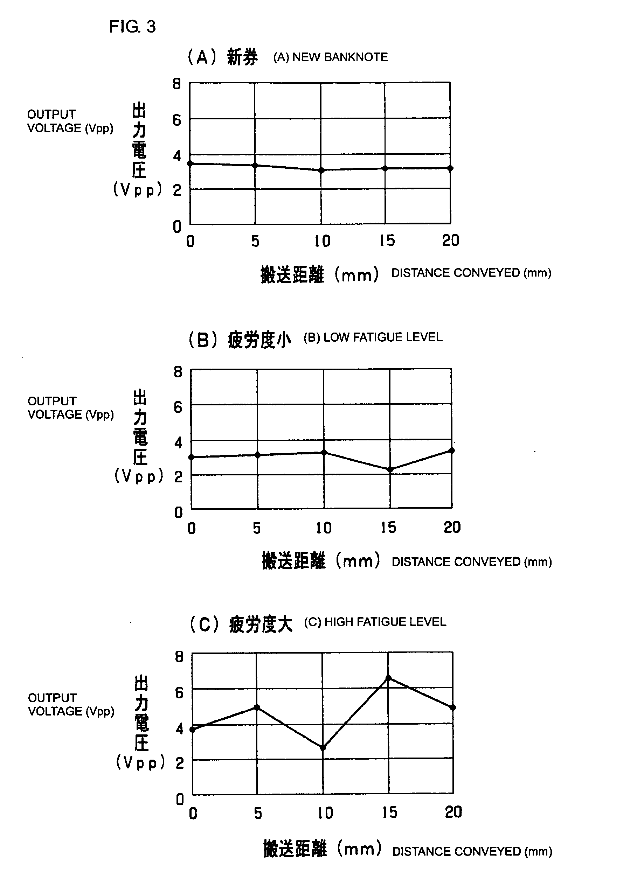

Fig. 2(A) shows a waveform of the output voltage representing the sensed intensity of the ultrasonic waves when the banknote is new. Fig. 2(B) shows a waveform of the output voltage representing the sensed intensity when the banknote has a low fatigue level. Fig. 2(C) shows a waveform of the output voltage representing the sensed intensity when the banknote has a high fatigue level. Fig. 3 is a graph showing a waveform representing a peak value (Vpp) of the output voltage shown in Fig. 2. More specifically, Fig. 3(A) shows changes in the peak value (Vpp) of the output voltage representing the sensed intensity when the banknote is new. Fig. 3(B) shows similar changes when the banknote has a low fatigue level. Fig. 3(C) shows similar changes when the banknote has a high fatigue level.

As seen from Figs. 2 and 3, a variation in the sensed intensity (peak value) is increased as the fatigue level increases. By measuring the variation in the sensed intensity, therefore, the fatigue of the sheet-like medium 5 (banknote) can be easily detected with no necessity of previously inputting master data as a reference and executing comparative processing operations with respect to detected data.

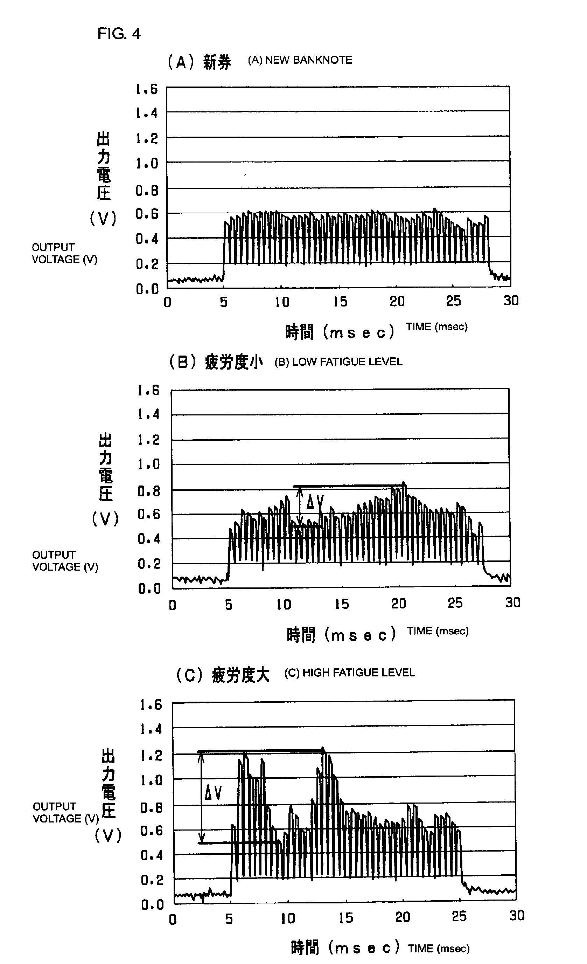

Fig. 4 shows, in more detail, a waveform of the output voltage representing the sensed intensity of the ultrasonic waves when a peak of the output voltage on the (+) side is held. The waveform is measured by setting the spacing between the ultrasonic sending device 11 and the ultrasonic receiving device 12 to 20 mm, setting the incident angle θ to 15°, conveying the sheet-like medium 5 at a speed of 1.0 m/sec, and applying 10 pulses of 300-kHz ultrasonic waves in the form of burst waves at intervals of 0.5 msec. Fig. 4(A) shows a waveform of the output voltage representing the sensed intensity when the banknote is new. Fig. 4(B) shows a waveform of the output voltage representing the sensed intensity for a fatigued portion of the banknote that has a low fatigue level. Fig. 4(C) shows a waveform of the output voltage representing the sensed intensity for a fatigued portion of the banknote that has a high fatigue level. As seen from Fig. 4(A), the output voltage hardly varies in the case of the new banknote. Also, as seen from Fig. 4(B), when the banknote has a low fatigue level, a voltage difference ΔV between a maximum value and a minimum value of the output voltage is about 0.3 V. Namely, the variation in the output voltage is small. On the other hand, as seen from Fig. 4(C), when the banknote has a high fatigue level, a voltage difference ΔV between a maximum value and a minimum value of the output voltage is about 0.7 V or more. Namely, the variation in the output voltage is extremely large. It is to be understood that, because the magnitude of the variation in the output voltage differs depending on, e.g., materials of the sheet-like medium 5, the voltage differences are not limited to the above-mentioned numerical values.

The incident angle θ will be described below. The incident angle θ is defined as an angle formed between the direction B normal to the principal surface of the sheet-like medium 5 and the direction in which the ultrasonic waves are sent from the ultrasonic sending device 11. Table 1, given below, shows the output voltage (Vpp) measured by using the apparatus, which is used to measure the waveform of the output voltage representing the sensed intensity shown in Fig. 4, while the incident angle θ is changed in units of 5° in the range of 0° to 20°.

### [Table 1]

**(Table 1)**

| Incident Angle θ (°) | Output Voltage (Vpp) |
|---|---|
| 0 | immeasurable |
| 5 | 3.33 |
| 10 | 3.18 |
| 15 | 3.12 |
| 20 | 3.15 |

If the incident angle θ is smaller than 5°, this means that the ultrasonic waves are incident on the sheet-like medium 5 substantially at a right angle. In some cases, therefore, the incident ultrasonic waves are multi-reflected and the variation in the output voltage representing the sensed intensity is increased to such an extent as making the fatigue of the sheet-like medium 5 undetectable. As shown in Table 1, a practically usable output voltage can be obtained at the incident angle of 5° or more. When the incident angle is in the range of 10° to 20°, the output voltage can be obtained at a satisfactory level sufficient to exclude the influence of driving noise. Even when the incident angle exceeds 20°, the measurement is practically possible. However, the distance between the ultrasonic sending device 11 and the ultrasonic receiving device 12 cannot be so increased (for the reason that the larger distance reduces sensitivity and enlarges the apparatus size). Further, because each of the ultrasonic sending device 11 and the ultrasonic receiving device 12 has a predetermined thickness, the ultrasonic sending device 11 and the ultrasonic receiving device 12 may contact the sheet-like medium 5 being conveyed if the incident angle θ is set too large. In consideration of those points, an upper limit value of the incident angle θ is preferably not larger than 20°.

Further, the distance between the ultrasonic sending device 11 and the ultrasonic receiving device 12 is preferably 20 mm or more. The reason is as follows. When the ultrasonic sending device 11 is driven, driving noise is generated. A predetermined distance is desirably left between the sheet-like medium 5 and each of the devices 11, 12 in order to sufficiently separate the driving noise from the output voltage representing the sensed intensity of the ultrasonic waves, which is obtained from the fatigued portion of the sheet-like medium 5. However, the sheet-like medium 5 is not always required to be conveyed in such a way as passing a middle point between the devices 11 and 12, and it may be conveyed to pass between the devices 11 and 12 at a point biased to either side. Additionally, the devices 11 and 12 may be arranged in the positional relationship reversal to that illustrated in Fig. 1, and the sheet-like medium 5 may be conveyed in a direction opposed to the direction of arrow A.

Each of the ultrasonic sending device 11 and the ultrasonic receiving device 12 used herein preferably has narrow directivity. Narrower directivity is effective in detecting the fatigued portion of the sheet-like medium 5 in a narrower range and increasing the sensed intensity of the ultrasonic waves.

With the embodiment described above, the ultrasonic waves are oscillated as burst waves from the sending device 11. By oscillating the ultrasonic waves in the form of burst waves, the sent waves can be specified per pulse and interference waves generated upon transmissive or reflective behaviors of the sent waves can be detected by the receiving device 12. Therefore, not only the presence or the absence of fatigue of the sheet-like medium 5, but also the fatigued position can be specified. On the other hand, if the ultrasonic waves are oscillated as standing waves, the sheet-like medium 5 is brought into a state where the oscillated ultrasonic waves are always irradiated to the sheet-like medium 5, and which one of the oscillated waves is reflected and causes interference cannot be specified. Thus, the presence or the absence of the fatigued portion, including wrinkles, etc., cannot be determined and a difficulty arises in specifying the position of the fatigued portion.

### Industrial Applicability

As described above, the present invention is usefully practiced as an apparatus and a method for detecting fatigue of a medium, such as a banknote. In particular, the present invention is advantageous in eliminating the necessity of previously inputting master data as a reference and executing comparative processing operations with respect to detected data, having versatility, and enabling fatigue of a sheet-like medium to be simply detected.

## Claims

1. A medium fatigue detection apparatus for detecting fatigue of a sheet-like medium by using ultrasonic waves, the medium fatigue detection apparatus comprising:
ultrasonic sending means for oscillating the ultrasonic waves as burst waves;
ultrasonic receiving means; and
sensed intensity detecting means for detecting intensity of the ultrasonic waves sensed by the ultrasonic receiving means,
wherein the ultrasonic sending means and the ultrasonic receiving means are arranged at such positions that both the means are opposed to each other with the sheet-like medium passing therebetween and that the ultrasonic waves sent from the ultrasonic sending means are incident on a principal surface of the sheet-like medium at a predetermined angle.

2. The medium fatigue detection apparatus according to Claim 1, wherein the ultrasonic waves sent from the ultrasonic sending means are incident on the principal surface of the sheet-like medium at an angle of 5° or more with respect to a normal direction to the principal surface.

3. The medium fatigue detection apparatus according to Claim 1 or 2, wherein a center axis of the ultrasonic sending means and a center axis of the ultrasonic receiving means are arranged to lie on a linear line in an opposed relation.

4. A medium fatigue detection method for detecting fatigue of a sheet-like medium by conveying the sheet-like medium to pass between ultrasonic sending means and ultrasonic receiving means, sending ultrasonic waves from the ultrasonic sending means to pass through the sheet-like medium, and receiving the ultrasonic waves by the ultrasonic receiving means, the medium fatigue detection method comprising the steps of:
oscillating the ultrasonic waves sent from the ultrasonic sending means, as burst waves, to be incident on a principal surface of the conveyed sheet-like medium at a predetermined angle;
receiving the ultrasonic waves having passed through the sheet-like medium by the ultrasonic receiving means which is disposed in an opposed relation to the ultrasonic sending means; and
detecting fatigue of the sheet-like medium by measuring a variation in sensed intensity of the received ultrasonic waves.

5. The medium fatigue detection method according to Claim 4, wherein the ultrasonic waves sent from the ultrasonic sending means are incident on the principal surface of the sheet-like medium at an angle of 5° or more with respect to a normal direction to the principal surface.

6. The medium fatigue detection method according to Claim 4 or 5, wherein the ultrasonic sending means and the ultrasonic receiving means are arranged to lie on a linear line in an opposed relation.
